Europäisches Patentamt

European Patent Office

Office européen des brevets

(11) Veröffentlichungsnummer: **0 495 399 A1**

## (12) EUROPÄISCHE PATENTANMELDUNG

(21) Anmeldenummer: **92100290.3**

(51) Int. Cl.5: **B65G 47/19**, B27N 3/14

(22) Anmeldetag: **09.01.92**

(30) Priorität: **16.01.91 DE 4101137**

(43) Veröffentlichungstag der Anmeldung:
**22.07.92 Patentblatt 92/30**

(84) Benannte Vertragsstaaten:
**AT CH DE DK FR GB IT LI SE**

(71) Anmelder: **FRITZ EGGER GESELLSCHAFT m.b.H.**

A-6380 St. Johann i.T.(AT)

(72) Erfinder: **Böhler, Harald**
**Sebastian Kneipp Strasse 31 c**
**A-6800 Feldkirch(AT)**

(74) Vertreter: **Sandmann, Joachim, Dr.**
**Hirtenstrasse 19**
**W-8012 Ottobrunn(DE)**

(54) **Glättvorrichtung zum Einebnen der Oberseite einer aus Schüttmaterial bestehenden Schicht.**

(57) Eine Schicht wird mittels eines Abstreifbandes 11 geglättet, unter dessen Unterkante das Schüttgut durchläuft. Das Abstreifband 11 ist wellenförmig um eine Querreihe von senkrechten Rollen 15, 16 geschlungen, die in Querrichtung oszillierend hin- und herbewegt werden. Dadurch wird das Abstreifband 11 in längsgerichtete Schwingungen mit einer quergerichteten Wellenwanderung versetzt, wodurch eine wirkungsvolle, schnelle und doch sanfte Verteilung der sich vor der Unterkante des Abstreifbandes 11 ansammelnden Staumenge und eine verbesserte Schichtglättung erreicht wird.

Fig. 2

EP 0 495 399 A1

Die Erfindung betrifft eine Glättvorrichtung zum Einebnen der Oberseite einer aus Schüttmaterial bestehenden Schicht mit einem sich in Querrichtung oberhalb eines Schichtträgers erstreckenden Abstreifer, dessen waagerechte Unterkante im der Schichthöhe entsprechenden Abstand über dem Schichtträger angeordnet ist, und mit einer Bewegungseinrichtung zur Erzeugung einer Relativbewegung zwischen dem Abstreifer und dem Schichtträger in dessen Längsrichtung.

Derartige Glättvorrichtungen, wie beispielsweise der Höhen- und Schichtregler aus der DE-PS 543 084, sind bekannt. Dabei ist der Abstreifer von einem ortsfest gehaltenen starren Brett oder dergleichen gebildet, unter dem die Schicht bzw. das Schichtmaterial, beispielsweise ein körniges oder zu Spänen oder Schnitzeln zerkleinertes Material, auf einem den Schichtträger bildenden Förderband durchläuft. Der Bandantrieb bildet die Bewegungseinrichtung zur Erzielung der Relativbewegung zwischen dem Abstreifer und dem Schichtträger.

Eine gleichmäßige Schichthöhe von Schütt- oder Streumaterial ist in vielen Fällen erwünscht, so beispielsweise beim Trocknen von Hackschnitzeln oder Holzspänen mittels durch die Schicht geleiteter Trocknungsluft. In diesem Falle werden Bereiche mit größerer Schichthöhe weniger stark und solche mit kleinerer Schütthöhe stärker durchströmt und getrocknet. Im Bereich von Vertiefungen oder Einbrüchen oder gar Löchern in der Schicht kann eine erhöhte Durchströmungsgeschwindigkeit außerdem dazu führen, daß die Schicht aufgewirbelt und aufgerissen wird und daß in unerwünschter Weise Materialteilchen und insbesondere Staubpartikel aus der Schicht austreten und von der Abluft mitgeführt werden. Diese Problematik ergibt sich beispielsweise bei der Trocknung von Spänen im Rahmen der Herstellung von Spanplatten. Im übrigen ist eine möglichst gleichmäßige Schichtstärke bzw. Schütthöhe vielfach in Produktionsprozessen notwendig.

Bekannte Abstreifer arbeiten meist mit einer ruhenden Abstreifkante. Diese Arbeitsweise funktioniert jedoch nur dann, wenn ständig über die ganze Breite des Abstreifers etwas überschüssiges Material angestaut wird, das dem Auffüllen örtlicher Schichtvertiefungen dient. Bei größeren Vertiefungen an der Oberseite der zu glättenden Schicht kann es jedoch sein, daß das an der betreffenden Stelle angestaute Material nicht ausreicht, die Vertiefung vollständig aufzufüllen. Das zu beiden Seiten der Vertiefung vor dem Abstreifer angestaute Material rutscht entsprechend dem materialspezifischen Schüttwinkel evtl. nur in unzureichendem Maße oder zu langsam seitlich in aufzufüllende Vertiefungen. Wenn nur mit einer begrenzten Anstauung vor dem Abstreifer gearbeitet werden kann, ist daher eine vollständige Einebnung der Oberseite der Schicht nicht sichergestellt.

Eine Verbesserung beim Auffüllen von Vertiefungen läßt sich erzielen, wenn dem Abstreifer eine Bewegung mit einer Querkomponente erteilt wird, weil dann in verstärktem Maße die gesamte angestaute Materialmenge vor dem Abstreifer zum Auffüllen von Vertiefungen und zur Bildung einer neuen Staureserve im der aufgefüllten Vertiefung entsprechenden Querbereich herangezogen wird. Eine entsprechende Quervibration des Abstreifers führt aber insbesondere bei großer Schichtbreite noch nicht zu dem gewünschten raschen Quertransport des Staumaterials an die Bedarfsstelle sowie zur gleichmäßigen Verteilung der Staureserve über die Gesamtbreite. Hinzu kommt vielfach, daß durch die der relativen Längsbewegung überlagerte Querbewegung des Abstreifers heftig auf die Schichtoberseite eingewirkt wird, was ein Freisetzen und Austragen von Materialstaub fördert und/oder zum Einprägen eines entsprechenden Musters in die Schichtoberseite führt.

Dementsprechend liegt der Erfindung die Aufgabe zugrunde, eine gattungsgemäße Glättvorrichtung so zu verbessern, daß bei örtlich ungleichmäßiger Zuführung des Schüttmaterials auf den Schichtträger eine größere Gewähr für ein vollständiges Einebnen der Oberseite der Schicht auch bei einer begrenzten Anstauung vor dem Abstreifer gegeben ist, ohne daß Nachteile wie erhöhter Staubaustrag in Kauf genommen werden müssen.

Diese Aufgabe wird erfindungsgemäß dadurch gelöst, daß der Abstreifer flexibel auslenkbar ausgebildet ist und das durch auf gegenüberliegenden Seiten angreifende Auslenkteile in wellenförmiger Erstreckung gehalten ist, und daß die Auslenkteile gemeinsam mittels einer Antriebseinrichtung längs des Abstreifers hin- und herbewegbar sind.

Beim Arbeiten mit dieser erfindungsgemäßen Glättvorrichtung wird zwar den Auslenkteilen eine Querbewegung erteilt, diese überträgt sich jedoch derart auf den Abstreifer, daß dessen über die Schichtbreite verteilten linienförmigen Elemente jeweils im wesentlichen nur längsgerichtete Schwingungen gegenüber der mittleren Querebene des Abstreifers ausführen. Dementsprechend ergibt sich eine wandernde Wellenbewegung des Abstreifbandes, bei der nur längsgerichtete und damit ebenfalls in Abstreifrichtung wirkende Kräfte aufgebracht werden, die im Falle einer ungleichmäßigen Anstauung der Materialreserve für einen wirkungsvollen, schnellen und doch sanften Quertransport gegebenenfalls auch über eine größere Querstrecke sorgen. Dabei kann durch entsprechende Auswahl der Wellenlänge, der Wellenamplitude und der Schwingungsfrequenz eine Anpassung an das betreffende Schichtmaterial vorgenommen und der geschilderte Ausgleich der Staureserve über die gesamte Schichtbreite günstig beeinflußt werden.

Infolge der ständigen Einwirkung des Abstreifers auf die angestaute Materialreserve wird nicht nur eine ständige gleichmäßige Verteilung über die Schichtbreite erreicht, es wird auch vermieden, daß es beim Auffüllen einer sich dem Abstreifer nähernden größeren Vertiefung zu örtlich starken Bewegungen des Schüttmaterials kommt, mit denen die Gefahr einer erhöhten Staubentwicklung verbunden wäre.

Die erfindungsgemäße Glättvorrichtung eignet sich nicht nur zum Einebnen von Schichten aus Schütt- oder Streumaterial sondern kann auch bei teigigem oder pastösem Material, beispielsweise im Falle einer Mörtelschicht, in entsprechender Weise vorteilhaft eingesetzt werden.

Zweckmäßige Ausgestalungen und Weiterbildungen der Erfindung ergeben sich aus den Unteransprüchen.

Ein Ausführungsbeispiel der Erfindung wird nachfolgend anhand einer schematischen Zeichnung näher erläutert. Es zeigen:

Fig. 1 die Glättvorrichtung in Verbindung mit einer nur zum Teil dargestellten Anlage zur Vortrocknung von Holzspänen in Seitenansicht und

Fig. 2 die Darstellung nach Fig. 1 in Draufsicht.

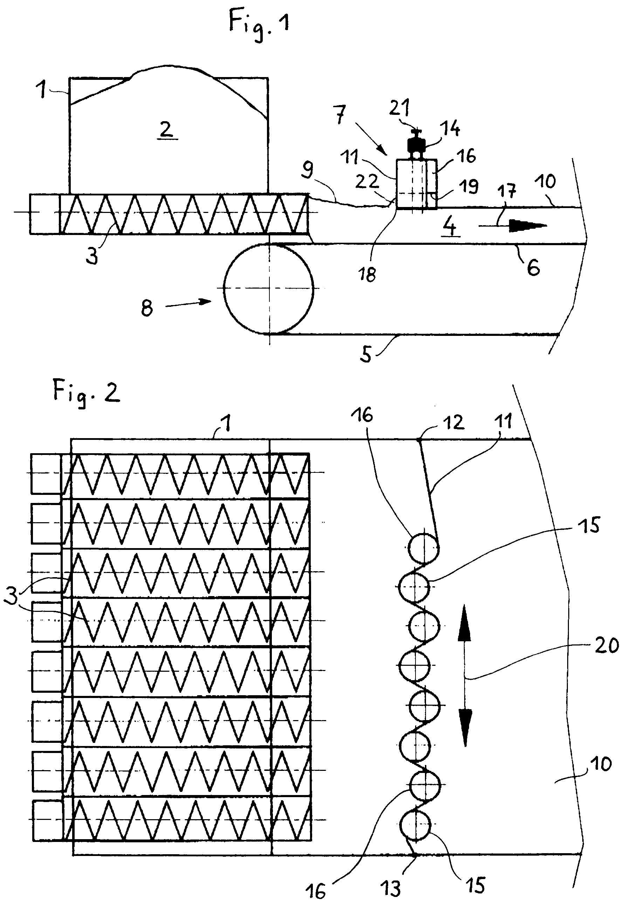

Figur 1 zeigt einen Silo 1, der mit Schüttmaterial 2 - im speziellen Fall handelt es sich um Holzspäne für die Herstellung von Spanfaserplatten - gefüllt ist. Das Schüttmaterial 2 wird in bekannter Weise mittels einer Reihe von Austragsschnecken 3 dem Silo 1 entnommen und in Form einer Schicht 4 auf ein Förderband 5 aufgebracht.

Das Obertrum des umlaufenden Förderbands 5 bildet einen Schichtträger 6. Die Glättvorrichtung weist im Abstand über dem Schichtträger eine Abstreifeinrichtung 7 auf, die sich gemäß Fig. 2 über die gesamte Breite des Förderbandes 5 und der auf diesem gebildeten Schicht 4 erstreckt, vorzugsweise und wie dargestellt rechtwinklig zur Laufrichtung des Förderbandes 5. Die Abstreifeinrrichtung 7 wirkt mit einer das Förderband 5 antreibenden Bewegungseinrichtung 8 zusammen. Die Bewegungseinrichtung ruft eine längsgerichtete Relativbewegung zwischen der Abstreifeinrichtung 7 und dem Schichtträger 6 hervor. Es kann aber auch - bei Verzicht auf eine kontinuierliche Betriebsweise - mit einem feststehenden Schichtträger und mit einer über diesen hinweg längsbewegten Abstreifeinrichtung gearbeitet werden.

Die erstrebte und erzielte Glättwirkung ist in Figur 1 angedeutet. Wie dort dargestellt weist die Schicht 4 vor der Abstreifeinrichtung 7 eine ungleichmäßige Höhe (Dicke) mit einer örtliche Vertiefungen aufweisenden Oberseite 9 sowie hinter der Abstreifeinrichtung 7 eine eingeebnete glatte Oberfläche 10 auf.

Die Abstreifeinrichtung 7 weist als Abstreifer 11 ein Abstreifband mit ortsfest gehaltenen Bandenden 12 und 13 auf. Ferner gehört zur Abstreifeinrichtung 7 ein Rollengestell 14, das sich in Querrichtung waagerecht oberhalb des Abstreifbandes erstreckt. An diesem Rollengestell 14 sind als Auslenkteile 15, 16 vier vordere Rollen 15 und vier hintere Rollen 16 in jeweils senkrechter Ausrichtung aufgehängt und drehbar gelagert. Ggf. können auch die unteren Enden der Rollen in nicht dargestellter Weise in einem die Konstruktion versteifenden Lagerteil drehbar abgestützt sein.

Wie in Figur 2 dargestellt sind die Rollen abwechselnd in einem vorderen Rollensatz und in einem hinteren Rollensatz gruppiert, wobei die vorderen Rollen 15 wie auch die hinteren Rollen 16 jeweils mit ihren Achsen in einer gemeinsamen Querebene angeordnet sind. Zwischen den beiden Querebenen ist wie dargestellt ein kleiner Längsabstand vorhanden. Das Abstreifband ist so wellenförmig um die Rollen geschlungen, daß die vorderen Rollen 15 an der Rückseite und die hinteren Rollen 16 an der Vorderseite des Abstreifbands - bezogen auf die in Fig. 1 durch den Pfeil 17 angedeutete Laufrichtung des Schichtträgers 6 - anliegen. Ferner ist aus Fig. 1 zu ersehen, daß das Abstreifband mit seiner Unterkante 18 etwas über die unteren Enden 19 der höhengleichen Rollen nach unten vorragt. Diese Maßnahme gewährleistet, daß die Rollen selbst nicht direkt auf die Schicht 4 einwirken.

Das Rollengestell 14 ist zusammen mit den Rollen in Querrichtung hin- und herbewegbar, wie es der Doppelpfeil 20 in Fig. 2 andeutet. Dazu sind dem Rollengestell 14 eine nicht dargestellte Querführung sowie eine in Figur 1 nur mit dem am Rollengestell 14 angreifenden Antriebsteil angedeutete Antriebseinrichtung 21 zugeordnet. In Figur 2 ist die Antriebseinrichtung 21 ebenso wie das Rollengestell 14 nicht dargestellt, um die Anordnung der Rollen sowie den Verlauf des Abstreifbandes deutlich sichtbar zu machen.

Die Rollenanordnung erstreckt sich über einen Breitenbereich, der etwas kleiner als die Schicht- oder Zuführbreite des Schüttmaterials 2 ist. Die vorhandene Breitendifferenz entspricht im wesentlichen der Hublänge, mit der die Rollenanordnung gemeinsam hin- und herbewegt wird. Im vorliegenden Falle entspricht dieser Hub dem Mittenabstand zwischen benachbarten vorderen Rollen 15 bzw. benachbarten hinteren Rollen 16. Somit kommen die Rollen im wesentlichen über die gesamte Schichtbreite zur Wirkung. Die Darstellung in Figur 2 entspricht also einer Hubendstellung, bei der die äußere vordere Rolle 15 der einen Seitenkante des Schichtträgers 6 benachbart ist. In der anderen Hubendstellung ist die äußere hintere Rolle 16 der anderen Seitenkante des Schichtträgers 6 entsprechend benachbart.

Die oszillierende Bewegung der Rollenanordnung in Querrichtung führt dazu, daß sich das Abstreifband bis zu seiner Unterkante 18 hinab ständig verformt, wobei die linienförmigen Bandelemente örtlich versetzt schwingende Längsbewegungen zwischen einer Wellenbauchstellung und einer Wellentalstellung ausführen und sich eine Wellenwanderung in der Querrichtung einstellt. Dabei ergibt sich die Wellenamplitude aus dem Durchmesser der Rollen und der Längsversetzung zwischen den beiden Rollensätzen. Die Wellenlänge entspricht dem Mittenabstand zwischen benachbarten Rollen desselben Rollensatzes.

Die vorstehend beschriebene Wellenbewegung des Abstreifbandes bewirkt eine schnelle gleichmäßige Verteilung des gesamten Staumaterials 22, das sich vor dem Abstreifband ansammelt.

Die Drehbarkeit der Rollen führt dazu, daß sie sich bei ihrer Querbewegung am Abstreifband abwälzen, was verschleißmindernd wirkt. Bei einem entsprechend flexiblen Abstreifband 11 und Inkaufnahme des Verschleisses können anstelle der drehbaren Rollen auch drehfeste Auslenkteile von ggf. nicht kreisförmigem Querschnitt vorgesehen werden, die dem Abstreifband eine Wellenform erteilen und gleitend mit ihm zusammenwirken.

Das Abstreifband kann beispielsweise aus Stahl oder auch aus Kunststoff hergestellt sein. Ebenso besteht die Möglichkeit, anstelle oder als Abstreifband eine Kette mit entsprechender Quersteifigkeit oder ein sonstiges Abstreifelement zu verwenden.

Ferner sei auf die Möglichkeit hingewiesen, die Abstreifeinrichtung 7 höhenverstellbar so auszuführen, daß sie sich bei zu großem Rückstau bzw. einer übermäßigen Ansammlung von Staumaterial 22 mit bestimmter Vorspannung im Sinne einer selbsttätigen Vergrößerung der Schichthöhe auslenkt, um das Staumaterial 22 auf einen zweckmäßigen Sollwert einzuregeln. Ebenfalls kann der durch das Staumaterial 22 verursachte Druck auf die Abstreifeinrichtung 7 laufend kontrolliert und ausgewertet werden, um die zugeführte Menge an Schüttmaterial 2 oder aber bei konstanter Materialzuführung die Bandgeschwindigkeit so zu regeln, daß die Menge an Staumaterial 22 innerhalb eines für die Schichtglättung zweckmäßigen Bereichs gehalten wird. Dem Fachmann sind entsprechende Maßnahmen geläufig.

Schließlich sei noch erwähnt, daß für den angesprochenen Zweck der Vortrocknung des Schüttmaterials 2 bzw. der Holzspäne ein perforiertes Förderband 5 verwendet wird, durch dessen Obertrum Trocknungsluft aufsteigt, die in gleichmäßiger Verteilung und mit gleichmäßiger Trocknungswirkung durch die geglättete Schicht 4 strömt. Infolge der Glättung der Schicht 4 trägt diese Trocknungsluft vergleichsweise wenig Staub aus der Schicht 4 aus, obwohl die verarbeiteten Holzspäne bei einer Durchströmung mit Trocknungsluft zur Freisetzung von Staub neigen. Wenn die Späne mittels einer Anlage gemäß der vorangehenden Beschreibung nur teilentfeuchtet werden und die Durchströmgeschwindigkeit der Trocknungsluft unter 1 m/sec gewählt wird, dann ist der gemessene Staubaustrag vernachlässigbar gering.

**Patentansprüche**

1. Glättvorrichtung zum Einebnen der Oberseite (9) einer aus Schüttmaterial (2) bestehenden Schicht (4) mit einem sich in Querrichtung oberhalb eines Schichtträgers (6) erstrekkenden Abstreifer (11), dessen waagerechte Unterkante (18) im der Schichthöhe entsprechenden Abstand über dem Schichtträger (6) angeordnet ist, und mit einer Bewegungseinrichtung (8) zur Erzeugung einer Relativbewegung zwischen dem Abstreifer (11) und dem Schichtträger (6) in dessen Längsrichtung, **dadurch gekennzeichnet,** daß der Abstreifer (11) flexibel auslenkbar ausgebildet ist und durch auf gegenüberliegenden Seiten angreifende Auslenkteile (15, 16) in wellenförmiger Erstreckung gehalten ist, und daß die Auslenkteile (15, 16) gemeinsam mittels einer Antriebseinrichtung (21) längs des Abstreifers (11) hin und herbewegbar sind.

2. Glättvorrichtung nach Anspruch 1, **dadurch gekennzeichnet,** daß der flexibel auslenkbare Abstreifer (11) von einem Abstreifband gebildet ist.

3. Glättvorrichtung nach Anspruch 1 oder 2, **dadurch gekennzeichnet,** daß die Auslenkteile (15, 16) in Querrichtung des Schichtträgers (6) zueinander versetzte, senkrecht ausgerichtete Profile mit gerundeter Umfangsfläche sind.

4. Glättvorrichtung nach Anspruch 3 , **dadurch gekennzeichnet,** daß die Auslenkteile (15, 16) Rollen sind, die an einem mittels der Antriebseinrichtung (21) hin- und herbewegbaren Rollengestell (14) drehbar gelagert sind.

5. Glättvorrichtung nach einem der Ansprüche 1 bis 4, **dadurch gekennzeichnet,** daß der Abstreifer (11) mit seiner Unterkante (18) nach unten über die Auslenkteile (15, 16) hinaus vorspringt.

6. Glättvorrichtung nach einem der Ansprüche 1 bis 5, **dadurch gekennzeichnet,** daß die Auslenkteile (15, 16) mit gleichbleibenden Querabständen sowie im Wechsel auf der Vorderseite und auf der Rückseite des Abstreifers (11) angeordnet sind.

7. Glättvorrichtung nach Anspruch 6, **dadurch gekennzeichnet,** daß die Hubstrecke der hin- und herbewegten Auslenkteile (15, 16) mindestens dem einfachen in Querrichtung des Schichtträgers (6) gemessenen Mittenabstand benachbarter Auslenkteile (15, 16) entspricht.

8. Glättvorrichtung nach einem der Ansprüche 1 bis 7, **dadurch gekennzeichnet,** daß die an der Rückseite und die an der Vorderseite des Abstreifers (11) angreifenden Auslenkteile (15, 16) jeweils in zueinander längsversetzten Querreihen angeordnet sind.

9. Glättvorrichtung nach Anspruch 8, **dadurch gekennzeichnet,** daß die an der Vorderseite des Abstreifers (11) angreifenden Auslenkteile (16) in der hinteren Querreihe, bezogen auf die Relativbewegung zwischen dem Abstreifer (11) und dem Schichtträger (6), angeordnet sind und die an der Rückseite des Abstreifers (11) angreifenden Auslenkteile (15) in der vorderen Querreihe, bezogen auf diese Relativbewegung, angeordnet sind.

10. Glättvorrichtung nach einem der Ansprüche 1 bis 9, **dadurch gekennzeichnet,** daß sie in Reihe mit mindestens einer weiteren Glättvorrichtung angeordnet ist.

Fig. 1

Fig. 2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| A | US-A-4 332 756 (W.C. BEAN) <br> * das ganze Dokument * <br><br> ----- | 1,10 | B65G47/19 <br> B27N3/14 |

RECHERCHIERTE
SACHGEBIETE (Int. Cl.5 )

B65G
B27N

Der vorliegende Recherchenbericht wurde für alle Patentansprüche erstellt

| Recherchenort | Abschlußdatum der Recherche | Prüfer |
|---|---|---|
| DEN HAAG | 07 APRIL 1992 | VAN ROLLEGHEM F. |